# EUROPEAN PATENT SPECIFICATION

(11) **EP 4 634 796 B1**
(45) Date of publication and mention of the grant of the patent: **12.08.2026**
(21) Application number: 24704336.7
(22) Date of filing: 02.02.2024
(51) Int. Cl.: G06F 18/21, G06V 10/776, G06V 10/82

(54) **AUTOMATICALLY QUANTIFYING A ROBUSTNESS OF AN OBJECT DETECTION MODEL APPLIED FOR A CONTROLLING TASK AND/OR A MONITORING TASK**
AUTOMATISCHE QUANTIFIZIERUNG DER ROBUSTHEIT EINES OBJEKTERKENNUNGSMODELLS, DAS FÜR EINE STEUERUNGSAUFGABE UND/ODER EINE ÜBERWACHUNGSAUFGABE VERWENDET WIRD
QUANTIFIER AUTOMATIQUEMENT LA ROBUSTESSE D'UN MODÈLE DE DÉTECTION D'OBJETS APPLIQUÉ À UNE TÂCHE DE CONTRÔLE ET/OU À UNE TÂCHE DE SURVEILLANCE

(30) Priority: 07.02.2023 EP 23155314
(43) Date of publication of application: 22.10.2025
(73) Proprietor: Siemens Aktiengesellschaft, 80333 München (DE)
(72) Inventor: BÜTTNER, Florian, 60316 Frankfurt (DE); YANG, Yinchong, 85579 Neubiberg (DE)
(74) Representative: Siemens Patent Attorneys
(86) International application number: PCT/EP2024/052641
(87) International publication number: WO 2024/165447

(56) References cited:
- PING-YEH CHIANG ET AL: "Detection as Regression: Certified Object Detection by Median Smoothing", ARXIV.ORG, CORNELL UNIVERSITY LIBRARY, 201 OLIN LIBRARY CORNELL UNIVERSITY ITHACA, NY 14853, 7 July 2020 (2020-07-07), XP081717764
- SAMUEL HENRIQUE SILVA ET AL: "Opportunities and Challenges in Deep Learning Adversarial Robustness: A Survey", ARXIV.ORG, 3 July 2020 (2020-07-03), XP081713386
- WENG TSUI-WEI ET AL: "ON EXTENSIONS OF CLEVER: A NEURAL NETWORK ROBUSTNESS EVALUATION ALGORITHM", 2018 IEEE GLOBAL CONFERENCE ON SIGNAL AND INFORMATION PROCESSING (GLOBALSIP), IEEE, 26 November 2018 (2018-11-26), pages 1159 - 1163, XP033520619, DOI: 10.1109/GLOBALSIP.2018.8646356
- TSUI-WEI WENG ET AL: "Evaluating the Robustness of Neural Networks: An Extreme Value Theory Approach", ARXIV.ORG, CORNELL UNIVERSITY LIBRARY, 201 OLIN LIBRARY CORNELL UNIVERSITY ITHACA, NY 14853, 31 January 2018 (2018-01-31), XP081211603
- DONG SU ET AL: "Is Robustness the Cost of Accuracy? -- A Comprehensive Study on the Robustness of 18 Deep Image Classification Models", ARXIV.ORG, CORNELL UNIVERSITY LIBRARY, 201 OLIN LIBRARY CORNELL UNIVERSITY ITHACA, NY 14853, 5 August 2018 (2018-08-05), XP080905145
- BI XIANG ET AL: "Evaluating the Robustness of Object Detection in Autonomous Driving System", 2022 9TH INTERNATIONAL CONFERENCE ON DEPENDABLE SYSTEMS AND THEIR APPLICATIONS (DSA), IEEE, 4 August 2022 (2022-08-04), pages 645 - 649, XP034212768, DOI: 10.1109/DSA56465.2022.00092

## Description

The present disclosure relates to an assistance apparatus and a computer-implemented method for automatically quantifying a robustness of an object detection model, preferably for object detection models (f) applied for controlling and/or monitoring an industrial manufacturing process or an autonomous driving vehicle.

Currently there is a trend of digitalization in the industry domain. Hence, e.g., a manufacturing process for a product may be digitally controlled. Considering complex industrial plants, the industrial plants usually comprise distinct components, parts, modules, or units with a multiplicity of individual functions. The units and their functions have to be controlled and regulated in an interacting manner. The increasing degree of digitalization allows for e.g., manufacturing, or industrial installation of products in a production line of the industrial plant to be performed by robot units or other autonomous units in an automatic manner.

The manufacturing process itself has to be monitored and controlled as well. The quality of the resulting manufactured products has to be monitored to identify early degradation of the product and to derive corrective control measures for the manufacturing components, e.g., to adapt settings of the component.

Artificial Intelligence ("AI") models for object detection based on image data are deployed and operated on the industrial environments as well as on public transport environments, e.g., for control tasks, quality tasks or monitoring tasks. These object detection models have to be "industrial-graded".

Another field of application for object detection methods is Identification and location of objects on a street or neighbouring environment from sensor data and/or image data in autonomous driving vehicles or traffic control systems to identify obstacles or traffic volume influencing traffic flow. This requires that the AI models have to be reliable and robust, even though, the conditions around its application scenario may change such as light conditions or positioning. AI based object detection models have to be certificated and released for use in public or private transport like trains or cars.

A verification component for verifying an artificial intelligence is known from EP 4105846 A1, a method of determining influence of attributes in Recurrent Neural Networks trained on therapy prediction is known from EP 3564862 A1.

Generally, the robustness of an object detection model is quantified with the heuristic search approach. However, object detection methods are typically based on very deep neural networks and a thorough search with tens of thousands of forward passes require large amount of computation resource. Furthermore, it remains unclear how local robustness, i.e., with respect to a certain test sample, should be defined. What can be done is to naively perturb a batch of images with varying degrees. Then, based on the usual metrics such as mean Average Precision (mAP), it can be decided at which perturbation degree is the mAP value not acceptable anymore and report this threshold value as the robustness certification.

Such an approach has several drawbacks: First, it only calculates the global robustness. One cannot quantify the measurement on a sample-by-sample basis. Second, it has a computation complexity that depends on the number of samples in the batch and the granularity of the heuristic search. Third, the threshold of an acceptable mAP is arbitrary and with such a purely empirical approach there are no theoretical guarantees that could warrant a meaningful certification. Importantly, it avoids specifying the real robustness definition by only using mAP as a replacement.

Although several methods have been applied to certify the robustness of classification models, especially with image input data. However, it is not yet known how to certify the robustness for object detection models. The major difference is that an object detection model produces not a single class prediction but sets of coordinates of bounding boxes with respective probability distributions over possible classes.

Further background information in robustness certification for object detection models can be found in PING-YEH CHIANG ET AL: "Detection as Regression: Certified Object Detection by Median Smoothing",ARXIV.ORG, CORNELL UNIVERSITY LIBRARY, 201 OLIN LIBRARY CORNELL UNIVERSITY ITHACA, NY 14853, 7 July 2020 (2020-07-07).

Therefore, it is the object of the present application to provide a method and a testing apparatus which automatically provides a robustness quantification applying realistic and reliable certification criteria for industry-grade or security-grade deep neural network-based object detection models with reduced computational complexity.

This object is solved by the features of the independent claims. The dependent claims contain further developments of the invention.

A first aspect concerns a computer-implemented method for automatically quantifying a robustness of an object detection model applied for a controlling task and/or a monitoring task, comprising the steps
- receiving the object detection model which is trained to output a predicted object in terms of a location in an image data and an object class out of a set of object classes when the image data is input into the object detection model,
- applying a set of robustness requirements for the object detection model,
- deriving from each robustness requirement a cross Lipschitz-ness function, which quantifies the robustness requirement conditioned on the object detection model for the input image data,
- determining a robustness value of the object detection model by calculating the cross Lipschitz-ness function integrated into a Cross Lipschitz Extreme Value for Network Robustness CLEVER score of the object detection model for a perturbed image data deviating from the unperturbed image data of the image data,
- outputting a positive certification for applying the object detection model in the controlling task and/or the monitoring task if the robustness value is below a predefined robustness threshold value.

The method provides a real and detailed definition of robust object detection. The cross Lipschitz-ness function is derived from each robustness requirement and integrated into the CLEVER framework. By using the cross Lipschitz-ness function for This provides a reliable measure for the robustness of the object detection model requiring a much smaller number of backward passes and therefore smaller processing capacity.

Each robustness requirement is defined by stating a scenario where the object detection model is not considered to be robust.

This allows an explicit definition of the robustness requirements and an unambiguous formulation of the Lipschitz-ness function. Thus, clear limitations can be formulated and provided.

According to a further embodiment the object detection model outputs a class probability for each bounding box of a set of bounding boxes, depending on the image data, wherein each bounding box specifies a location area in the image data, and wherein each of the bounding boxes having a class probability higher than a predefined probability value is a predicted bounding box.

This object detection model provides features which are well suited for the specified robustness analysis. This type of object detection model is widely used and provides reliable results. A well-known and applied object detection model of this type are models similar or according to a YOLO model.

In a further embodiment according to a first robustness requirement, the object detection model is not robust, if at least one predicted bounding box of the object detection model processed with perturbed image data is misclassified in comparison with the prediction of the object detection model processed with unperturbed image data.

This robustness requirement covers a scenario when the perturbation in the image data is such, that the object detection model provides in general a misclassification.

In a further embodiment according to a second requirement the object detection model is not robust, if at least one bounding box which was output as predicted bounding box by the object detection model (f) for unperturbed image data (x0) is omitted and no longer output as a predicted bounding box by the object detection model (f) for perturbed image data (xp).

This provides a crucial criterion for robustness with respect false negative predictions.

In a further embodiment according to a third robustness requirement the object detection model is not robust if at least one bounding box is output as a predicted bounding box by the object detection model for perturbed image data although the same bounding box was not a predicted bounding box output by the object detection model for unperturbed image data.

This provides a crucial criterion for robustness with respect false positive predictions.

In a further embodiment according to a fourth robustness requirement the object detection model is not robust if at least one predicted bounding box output by the object detection model for perturbed image data is different in terms of size and location in the image data from the same predicted bounding box output by the object detection model for unperturbed image data.

This requirement specifies the object detection model as not robust if the position or size of the "same" bounding box is different when output by the object detection model for perturbed image data in comparison to unperturbed image data. This provides a crucial robustness requirement for robustness in terms of the location of a predicted object.

According to a further embodiment an agreement of the at least one predicted bounding box output for perturbed image data (xp) and the at least one predicted bounding box output for unperturbed image data (x0) is determined by an Intersection-over-Union functional unit.

The Intersection-over-Union functional unit is a commercially available unit providing fast processing and requires only minor adaptation work. Such, applying the Intersection-over-Union functional unit is cost and processing capacity effective.

According to a further embodiment the perturbed image data is sampled from a hyperball centred at the unperturbed image data.

Evaluating the object detection model with such perturbed image data takes also into account adversarial attacks, which are based on perturbations in image data which are mostly invisible for human eye but result in a wrong prediction output by the object detection model. Wrong prediction means here a change in the prediction in comparison to the prediction of the unperturbed image data.

According to a further embodiment all data elements of the image data (x) are unperturbed image data (x0), or wherein only data elements of the image data (x) located inside at least one of the bounding boxes of the image data (x) are unperturbed image data (x0) and these data elements are used to determine the robustness value.

Data elements of the image data are synonymously named pixels.

Considering only the pixels of the image data located inside the boundary boxes reduces the number of pixels to be processed and reduces the processing capacity in addition.

According to a further embodiment the object detection model is applied for controlling and/or monitoring an industrial manufacturing process or an autonomous driving vehicle.

Therefore, the certified object detection model is applied in application environments which require especially reliable and robust models.

According to a further embodiment the received object detection model is re-trained with a set of training image data which is selected such to optimize the robustness value, if the robustness value is higher than the predefined robustness threshold.

This allows optimizing the object detection model especially with respect to the deficiencies determined during the robustness quantification.

According to a further embodiment the method additionally comprises the steps
- receiving at least one further different object detection model trained to output at least one predicted object class,
- determining the robustness value of each of the received object detection models,
- outputting a list of the robustness values of all object detection models with a positive certification,
- selecting one of the listed object detection models, and
- using the selected object detection model for the control-ling task and/or the monitoring task.

This allows the selection of the most suitable object detection model with respect to the robustness requirements of the considered controlling or monitoring task.

A second aspect concerns to a certification apparatus comprising at least one processor configured to perform the steps
- receiving the object detection model which is trained to output a predicted object in terms of a location in an image data and an object class out of a set of object classes when the image data is input into the object detection model,
- receiving a set of robustness requirements for the object detection model,
- deriving from each robustness requirement a cross Lipschitz-ness function, which quantifies the robustness requirement conditioned on the object detection model for the input image data,
- determining a robustness value of the object detection model by calculating the cross Lipschitz-ness function integrated into a Cross Lipschitz Extreme Value for Network Robustness CLEVER score of the object detection model for a perturbed image data deviating from the unperturbed image data of the image data,
- outputting a positive certification for applying the object detection model in the controlling task and/or the monitoring task if the robustness value is below a predefined robustness threshold value, wherein each robustness requirement is defined by stating a scenario where the object detection model (f) is not considered to be robust.

The certification apparatus provides a certification of the considered received object detection model in a processing optimized way. The certification apparatus can be part of a certification system evaluating the received object detection model with respect to further criteria relevant for attesting an "industry-grade" or "transportation-grade" object detection model. The certification apparatus can comprise an output interface directly coupled with a controller applying the object detection model for the controlling and/or monitoring task.

A third aspect concerns to a computer program product directly loadable into the internal memory of a digital computer, comprising software code portions for performing the steps as described before, when said product is run on said digital computer.

The computer program product can be stored on a computer-readable storage medium comprising instructions which, when executed by a computer, cause the computer to carry out the steps as described before.

The invention will be explained in more detail by reference to accompanying figures. Similar objects will be marked by the same reference signs.
- Figure 1: shows an embodiment of the inventive method illustrated by a flow diagram.
- Figure 2: shows an output generated by an object detection model received in an embodiment of the inventive method in a schematical form.
- Figure 3: shows an embodiment of a scenario corresponding to the first robustness requirement of the inventive method in schematical form.
- Figure 4: shows an embodiment of a scenario corresponding to the second or third robustness requirement of the inventive method in schematical form.
- Figure 5: shows an embodiment of a scenario corresponding to one of the fourth robustness requirement of the inventive method in schematical form.
- Figure 6: schematically illustrates an embodiment of the processing steps of the inventive method, and
- Figure 7: schematically illustrates an embodiment of an inventive certification apparatus in an industrial or transportation environment.

It is noted that in the following detailed description of embodiments, the accompanying drawings are only schematic, and the illustrated elements are not necessarily shown to scale. Rather, the drawings are intended to illustrate functions and the co-operation of functions or components. Here, it is to be understood that any connection or coupling of functional blocks, devices, components or other physical or functional elements could also be implemented by an indirect connection or coupling, e.g., via one or more intermediate elements. A connection or a coupling of elements or components or nodes can for example be implemented by a wire-based, a wireless connection and/or a combination of a wire-based and a wireless connection. Functional units can be implemented by dedicated hardware, e.g., processor, firmware or by software, and/or by a combination of dedicated hardware and firmware and software. It is further noted that each functional unit described for an apparatus can perform a functional step of the related method and vice versa.

Object detection models are or shall be applied in an industrial environment to perform quality control, e.g., to detect misplacements on printed circuit boards, as well as for controlling autonomous movement of robots on the shop floor in an industrial plant. In autonomous driving vehicles such as cars but also trains, object detection models are applied to detect obstacles which trigger control instructions to adapt the movement of the vehicle to the recognised environmental situation. For the safety of the industrial environment or traffic environment it is extremely important that the applied object detection models are not only reliable in terms or the correctness of the output prediction, but the models are robust in terms of providing the correct prediction even when the input image data is disturbed due to natural disturbances and due to hostile attacks.

In machine learning, robustness quantification refers to a task of identifying the maximum degree of data perturbation that does not change the model's prediction. For instance, a binary image classification model may classify a given image as class A with confidence 90% and class B with 10%. When the brightness of the image is changed towards 0, implying complete dark, it may be observed that the confidence of class A will decreases while the confidence of class B increases. At some point, the confidence of class B will overtake the confidence of A and the model thus changes its prediction.

But there are also artificial, e.g., hostile perturbations. Commonly, object detection models are structured as artificial deep neural networks. By identifying patterns that these neural networks use to function, attackers can modify input data in such a way that the deep neural network finds a match that human observers would not recognize. For example, an attacker can make subtle changes to an image such that the deep neural network finds a match with respect to an object class even though the image looks to a human nothing like the matched object. Such manipulation is termed an "adversarial attack".

Finding the exact maximum value of the perturbation degree where the model retains its original prediction provides a quantitative measurement of the model's robustness.

There are mainly two classes of methods to quantify the robustness depending on the type of the perturbation:
i). For natural perturbations, such as change of brightness, grid distortion, rotations, etc., a heuristic could be performed to locate the maximum value of perturbation, including binary search, recursive grid search, or simply raising the perturbation degree from 0 by a small value until the model changes its prediction. These methods often require large amount of computation resource to repeatedly evaluate the model but could be parallelized.
ii). For adversarial perturbations, also called gradient-based adversarial attacks, one could not only perform the heuristic search but also more efficient methods such as mixed integer linear programming, random smoothing or calculating the cross Lipschitz-ness via the gradient norms. Calculating cross Lipschitz-ness is described by Weng, Tsui-Wei, et al. in "Evaluating the robustness of neural networks: An extreme value theory approach." ICLR (2018), and by Hein, Matthias and Maksym Andriushchenko "Formal guarantees on the robustness of a classifier against adversarial manipulation.", in Advances in neural information processing systems 30 (2017). The mentioned gradient norms are disclosed by Paulaviĉius, Remigijus, and Julius Ẑilinskas. "Analysis of different norms and corresponding Lipschitz constants for global optimization." Technological and Economic Development of Economy 12.4 (2006): 301-306.

These methods have been applied to certify the robustness of classification models, especially with image input data. However, one doesn't yet know, how to certify the robustness for an object detection model which produces not a single class prediction but sets of coordinates of bounding boxes with respective probability distributions over possible classes. Such object detection models,
e.g., YOLO, described in an article of Redmon, Joseph, et al. "You only look once: Unified, real-time object detection." Proceedings of the IEEE conference on computer vision and pattern recognition. 2016,
and its variants do not satisfy strict piecewise linear constraints required by mixed integer linear programming. Random smoothing is only applicable for simple classification tasks.

Quantifying the robustness of an object detection model with the heuristic search approach requires huge processing power. Object detection methods are typically based on very deep neural networks and a thorough search with tens of thousands of forward passes require large amount of computation resource. Furthermore, it remains unclear how local robustness, i.e., with respect to a certain test sample, should be defined. For adversarial perturbations, also known as gradient-based adversarial attacks, not only the heuristic search can be performed but also more efficient methods such as mixed integer linear programming, random smoothing or calculating the cross Lipschitz-ness, as mentioned in the article of Weng et al. In this article a novel robustness metric called CLEVER is described, which is short for Cross Lipschitz Extreme Value for nEtwork Robustness.

The method described in the following, consists of two major features. First, a set of valid robustness requirements are deployed for object detection models, which output sets of coordinates of bounding boxes with respective probability distributions over possible object classes. Specifically, each of these robustness requirements is defined by stating a scenario where the model is not to be seen as robust. Second, a cross Lipschitz-ness function is derived from each robustness requirement, which is applied in combination of a CLEVER score as described in the above-mentioned articles of Weng et al and Hein et al to certify the robustness of the model.

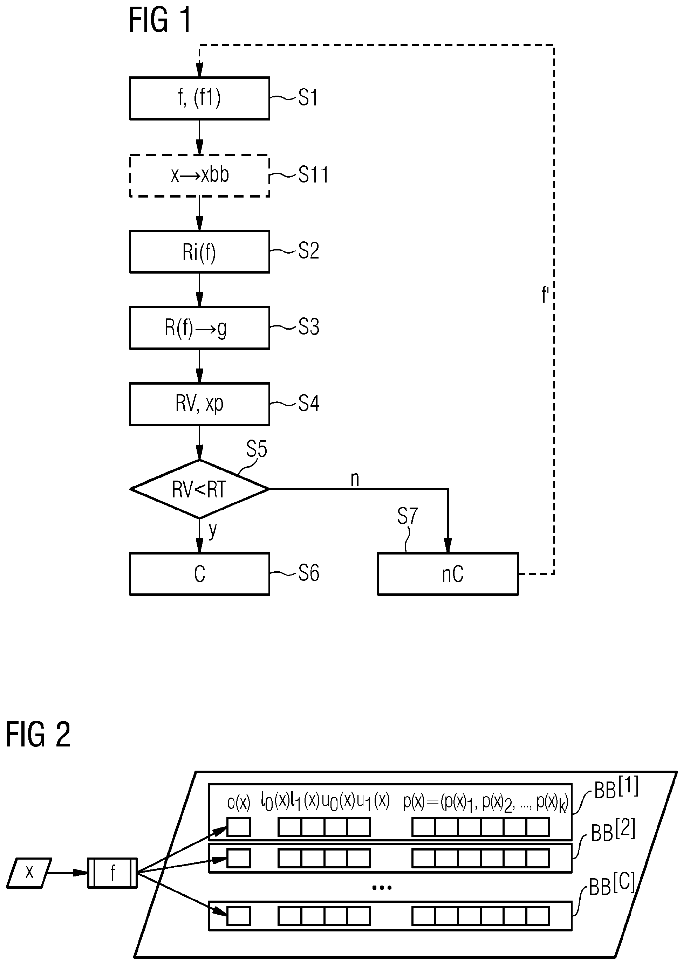

A computer-implemented method for automatically quantifying a robustness of an object detection model is proposed, illustrated in Fig.1 and described in detail in the following.

The object detection model which is applied for a controlling task and/or a monitoring task in e.g., an industrial manufacturing shop floor or an autonomous driving environment.

In a first step S1 the object detection model f is received. The object detection model f is trained to output a set of predicted objects and is intended to be applied in a control-ling task or a monitoring task. For image data x which are input into the object detection model f, the object detection model f outputs predicted objects. Each of these object predictions consist of i) the location of bounding box that may contain a potential object, ii) a feasibility score quantifying the likelihood that there exists an object in the bounding box, and iii) a distribution over all known classes, indicating of which class the object may be.

In a second step S2 a set of robustness requirements Ri is applied to the object detection model. A cross Lipschitz-ness function g is derived from each robustness requirement Ri, which quantifies the robustness requirement Ri conditioned on the object detection model f for the input image data x, see step S3. A robustness value RV of the object detection model f is determined by calculating the cross Lipschitz-ness function integrated into a Cross Lipschitz Extreme Value for Network Robustness CLEVER score of the object detection model for a perturbed image data xp deviating from the unperturbed image data x0 of the image data x, see step S4. The unperturbed image data x0 is identical to the image data x.

In step S5, the determined robustness value RV is compared with a predefined robustness threshold value RT. Finally, a positive certification C for applying the object detection model in the control-ling task and/or the monitoring task is output if the robustness value RV is below the predefined robustness threshold value RT, see step S6. The robustness threshold has to be pre-defined and requires domain knowledge. The certification C indicates that the received object detection model is robust enough to comply with the pre-set robustness threshold RV with respect to the set of robustness requirements defined for the application scenario.

If the determined robustness value RV is not below the robustness threshold, a message is output indicating that the certification requirements are not fulfilled, see step S7. In an embodiment, additional information is output with respect to the at least one robustness requirement which caused to fail the robustness threshold value. In a further embodiment the received object detection model f is re-trained with a set of training image data. The set of training image data is selected based on the additional information to optimize the robustness value. The received object detection model f is re-trained with the set of training image data resulting in an optimized object detection model f' which is input to the method at step S1 for quantifying the robustness of the optimized object detection model f', see dashed arrow in Fig. 1.

In a first embodiment, all data elements of the image data are used to determine the robustness value. In a second embodiment, only data elements of the image data located inside at least one of the bounding boxes output by the object detection model f for the image data (x) are used to determine the robustness value. For the second embodiment an additional method step, see S11 in Fig.1, is performed. In method step 11 all data elements of the unperturbed image data x are processed by the received object detection model f which, in result, outputs bounding boxes in terms of location inside the image data. Only those data elements xbb located inside these bounding boxes are processed in the steps S2-S7 to determine the robustness value and outputting the certification. This significantly reduces the processing capacities required to perform the method. In an embodiment the data elements of a subset of the output bounding boxes are applied for performing the steps S2-S7.

In a further embodiment, the method steps S1 to S5 are performed for at least one further different object detection model f1, which is trained to output at least one predicted object class. A robustness value is determined for each of the received further object detection models f1 and a list of the robustness values of all further object detection models f1 with a positive certification is output. One further object detection models f1 out of the list, e.g., the further object detection model with the lowest robustness value, is selected, and used for the controlling task and/or the monitoring task.

The structure of the received object detection model f is explained with respect to the input data x and output data f(x) is illustrated in Fig.2 and explained below.

The object detection model f obtains as input image data $x ∈ {\left[0, 255\right]}^{H \times W \times 3} ,$ where H and W represent the image height and width. The value xi of each single data element is a scalar value, e.g., indicating a color value in the range of 0 to 255. The output f(x) of the model produces a set of bounding boxes BB that are annotated class probabilities: $f \left(x\right) = \left(BB{\left(x\right)}^{\left[1\right]},BB{\left(x\right)}^{\left[2\right]},…,BB{\left(x\right)}^{\left[C\right]}\right)$

The number C of bounding boxes BB in the set of bounding boxes BB is pre-defined and each bounding box consists of the following information: $BB \left({x}^{\left[c\right]}\right) = \left(o{\left(x\right)}^{\left[c\right]},{l}_{0}{\left(x\right)}^{\left[c\right]},{u}_{0}{\left(x\right)}^{\left[c\right]},{l}_{1}{\left(x\right)}^{\left[c\right]},{u}_{1}{\left(x\right)}^{\left[c\right]},p{\left(x\right)}^{\left[c\right]}\right)$ with
*o*(***x***)^{[*c*]} representing a logistic regression to predict a "object-ness score" for each bounding box,
${b}_{0}^{\left[c\right]} , {b}_{1}^{\left[c\right]}$being the x- and y-coordinates of the center of the bounding box BB, respectively, and
*h*^{[c]}*,w*^{[*c*]} being the height and width of the bounding box BB, respectively,
*l*₀*,u*₀ denoting the left most and right most coordinates in x, respectively
*l*₁,*u*₁ denoting the left most and right most coordinates in y,
***p***^{[c]} ∈ **[0,1]*^{K}*** being the probability distribution over K possible classes.

Note that each of these terms depend on input ***X***.

A perturbation function *π*(***x***|*ε*) is parameterized by a degree ε. The cross Lipschitz-ness function is noted with g(), following the notation in the article of Redmon, see above.

The object detection model e.g., like YOLO version 4 and later, which is structured as convolutional neural network which uses features from the entire image to predict each bounding box BB. It also predicts all bounding boxes BB across all classes for an image simultaneously.

Valid robustness requirements are stated which have to be fulfilled by the object detection model f. Specifically, each of these robustness requirements Ri is defined by stating a scenario where the object detection model f is not to be seen as robust.

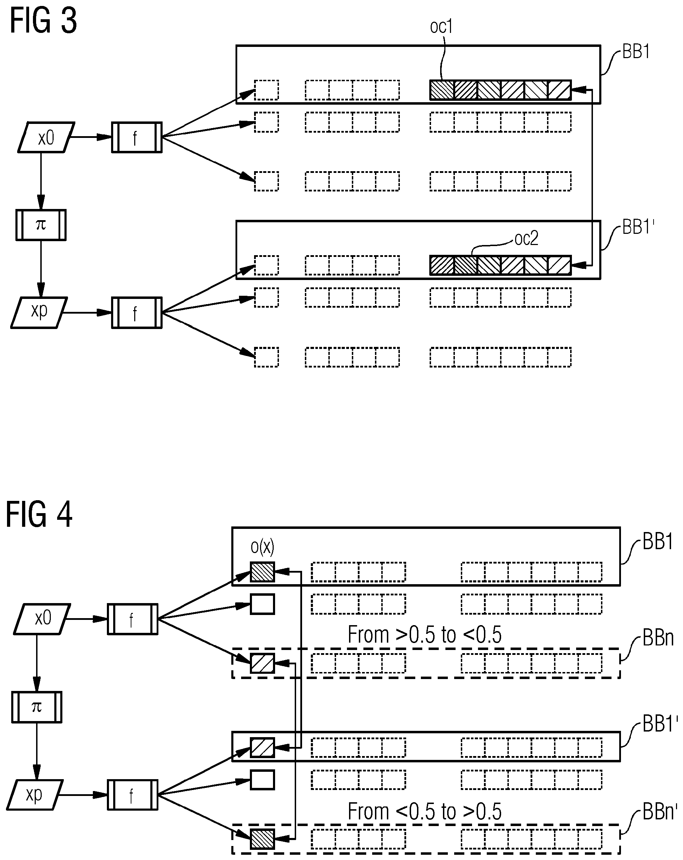

A first robustness requirement is applied which indicates that an object detection model is NOT robust if a predicted bounding box is misclassified in comparison with unperturbed prediction. I.e., the first robustness requirement indicates that the object detection model is not robust, if at least one predicted bounding box of the object detection model processed with perturbed image data xp is misclassified in comparison with the prediction of the object detection model processed with unperturbed image data x0. This scenario is illustrated in Fig. 3. Whereas with unperturbed image data x0 the object detection model f outputs for the bounding box BB1 object class oc1 having the highest probability, the object detection model f outputs for the same boundary box BB1 object class oc2 having the highest probability when perturbed image data xp are input. In scenario 1, at least for one bounding box, the distribution of object classes has changed under perturbation.

Formally this is expressed by: $∃ c ∈ \left[1, C\right] : {max}_{k} p {\left(x\right)}^{\left[c\right]} \neq {max}_{k} p {\left(π\left(\left.x\right|ε\right)\right)}^{\left[c\right]}$

The corresponding cross Lipschitz-ness function is defined for all the bounding boxes c=1...C as ${g}_{1} {\left(x\right)}^{\left[c\right]} = {max}_{k} p {\left({x}^{˜}\right)}^{\left[c\right]} - {max}_{k ′ \neq k} p {\left({x}^{˜}\right)}^{\left[c\right]}$ where ***x̃*** is sampled from a hyper ball *Bₚ* centered at an original data point ***x. x̃*** corresponds to the perturbed image data. ***x*** corresponds to the unperturbed image data. ***π*** is the perturbation added to the unperturbed image data ***x*.** Note that this is equivalent to the algorithm 2 in the article of Weng et al.

According to a second robustness requirement the object detection model is not robust, if at least one bounding box which was output as predicted bounding box by the object detection model f for unperturbed image data x0 is omitted and no longer output as a predicted bounding box by the object detection model f for perturbed image data xp. In other words, the object detection model f is not robust if an originally predicted bounding box is omitted under perturbation, i.e., it is a false negative prediction. Specifically for a YOLO model of version later than 3, which applies a logistic regression to predict a "object-ness score" for each bounding box, this is formally stated by: $∃ c ∈ \left[1, C\right] : o {\left(π\left(\left.x\right|ε\right)\right)}^{\left[c\right]} < \left.0.5\right| o {\left(x\right)}^{\left[c\right]} > 0.5$ where ***o***() denotes a logistic regression with input being the image data and ***x̃*** is sampled from a hyper ball *Bₚ* centered at an original data point **x.**

According to a third robustness requirement the object detection model f is not robust if at least one bounding box is output as a predicted bounding box by the object detection model for perturbed image data xp although the same bounding box was not a predicted bounding box output by the object detection model f for unperturbed image data x0. In other words, the object detection model f is not robust if a bounding box is predicted under perturbation although it was originally omitted. This means the object detection model outputs a false positive prediction, which is the opposite to the scenario of the second robustness requirement.

Formally the third robustness requirement is stated by $∃ c ∈ \left[1, C\right] : o {\left(π\left(\left.x\right|ε\right)\right)}^{\left[c\right]} > \left.0.5\right| o {\left(x\right)}^{\left[c\right]} < 0.5$

Both cases, i.e., the second and the third robustness requirement share the same formulation of cross Lipschitz-ness function, which is: ${g}_{2} {\left(x\right)}^{\left[c\right]} = o {\left({x}^{˜}\right)}^{\left[c\right]} - \left(1-o{\left({x}^{˜}\right)}^{\left[c\right]}\right) = 2 ⋅ o {\left({x}^{˜}\right)}^{\left[c\right]} - 1$ where ***x̃*** is sampled from a hyper ball Bp centered at an original data point ***x*.** As before, ***x̃*** is the perturbed image data xp and ***x*** is the unperturbed image data x0.

The scenarios related to the second and third requirement are illustrated in Fig.4. Under perturbation, and at least for one bounding box, the object-ness score *o*(***x***) has changed from <0.5 to >0.5 or vice versa. In Fig.4 the object-ness score *o*(***x***) of predicted bounding box BB1 determined for the unperturbed image data x0 changed from a value >0.5 to a value <0.5 output by the object detection model f for perturbed image data xp, see bounding box BB1'. For bounding box BBn, the object-ness score *o*(***x***) with a value <0.5 when determined for unperturbed input image data x0 has changed to an object-ness score value >0.5 for perturbed image data xp, see BBn'.

According to a fourth requirement the object detection model is not robust if at least one bounding box output by the object detection model f for perturbed image data xp is different in terms of size and location in the image data from the same bounding box output by the object detection model f for unperturbed image data x0. In other words, the object detection model f is not robust if a bounding box predicted under perturbation does not agree with the one originally predicted without perturbation.

This agreement of the at least one bounding box output for perturbed image data xp and the at least one predicted bounding box output for unperturbed image data x0 is determined by an Intersection-over-Union functional unit, wherein a threshold for the maximum value for the determined intersection of union is set to an intersection threshold θ. The value for the intersection threshold θ typically varies between 0.5 and 0.95, depending on the specific use case.

This robustness requirement is formally provided by $∃ c ∈ \left[1, C\right] : IoU \left(BB{\left(π\left(\left.x\right|ε\right)\right)}^{\left[c\right]},BB{\left(x\right)}^{\left[c\right]}\right) < θ$

Specifically, the calculation of IoU between two bounding boxes predicted from input x and z: $IoU \left(BB{\left(x\right)}^{\left[c\right]},BB{\left(z\right)}^{\left[c\right]}\right) = \frac{Int \left(BB{\left(x\right)}^{\left[c\right]},BB{\left(z\right)}^{\left[c\right]}\right)}{Uni \left(BB{\left(x\right)}^{\left[c\right]},BB{\left(z\right)}^{\left[c\right]}\right)}$ where $\begin{matrix}Int \left(BB{\left(x\right)}^{\left[c\right]},BB{\left(z\right)}^{\left[c\right]}\right) \\ = min \left({u}_{0}{\left(x\right)}^{\left[c\right]},{u}_{0}{\left(z\right)}^{\left[c\right]}\right) \\ - max \left({l}_{0}{\left(x\right)}^{\left[c\right]},{l}_{0}{\left(z\right)}^{\left[c\right]}\right) \times min \left({u}_{1}{\left(x\right)}^{\left[c\right]},{u}_{1}{\left(z\right)}^{\left[c\right]}\right) \\ - max \left({l}_{1}{\left(x\right)}^{\left[c\right]},{l}_{1}{\left(z\right)}^{\left[c\right]}\right)\end{matrix}$ and $Uni \left(BB{\left(x\right)}^{\left[c\right]},BB{\left(z\right)}^{\left[c\right]}\right) = A \left(BB{\left(x\right)}^{\left[c\right]}\right) + A \left(BB{\left(z\right)}^{\left[c\right]}\right) - Int \left(BB{\left(x\right)}^{\left[c\right]},BB{\left(z\right)}^{\left[c\right]}\right)$ $A \left(BB{\left(x\right)}^{\left[c\right]}\right) = \left({u}_{0}{\left(x\right)}^{\left[c\right]}-{l}_{0}{\left(x\right)}^{\left[c\right]}\right) \times \left({u}_{1}{\left(x\right)}^{\left[c\right]}-{l}_{1}{\left(x\right)}^{\left[c\right]}\right)$ $A \left(BB{\left(z\right)}^{\left[c\right]}\right) = \left({u}_{0}{\left(z\right)}^{\left[c\right]}-{l}_{0}{\left(z\right)}^{\left[c\right]}\right) \times \left({u}_{1}{\left(z\right)}^{\left[c\right]}-{l}_{1}{\left(z\right)}^{\left[c\right]}\right)$

The corresponding cross Lipschitz-ness function is proposed by: ${g}_{3}^{∗} {\left(x\right)}^{\left[c\right]} = IoU \left(BB{\left({x}^{˜}\right)}^{\left[c\right]},BB{\left(x\right)}^{\left[c\right]}\right)$

That is, the Lipschitz-ness function is simply the Intersection of Union IoU between bounding boxes output by the object detection model for perturbed image data and original, i.e., unperturbed image data. This is exactly as stated in the robustness requirement itself.

This function is differentiable in ***x̃*** and thus compatible with the CLEVER framework described by Weng et al. However, the gradient in ***x̃*** will become 0 if the bounding box after perturbation does not have an intersection part with the original bounding box (0 in the numerator). To this end, we propose a proxy to the actual IoU calculation which is supposed to be numerically more stable: ${g}_{3} {\left(x\right)}^{\left[c\right]} = {\left‖\left({l}_{0}{\left({x}^{˜}\right)}^{\left[c\right]},{l}_{1}{\left({x}^{˜}\right)}^{\left[c\right]},{u}_{0}{\left({x}^{˜}\right)}^{\left[c\right]},{u}_{1}{\left({x}^{˜}\right)}^{\left[c\right]}\right)-\left({l}_{0}{\left(x\right)}^{\left[c\right]},{l}_{1}{\left(x\right)}^{\left[c\right]},{u}_{0}{\left(x\right)}^{\left[c\right]},{u}_{1}{\left(x\right)}^{\left[c\right]}\right)\right‖}_{p}$ where ***x̃*** is sampled from a hyper ball Bp centered at an original data point x. The data points of a hyperball are located in a fixed distance from the data point x which is provided by a radius of the hyperball.

This is the distance between the perturbed and original coordinates in an Lp space. For p=2, it corresponds to the common training loss of an object detection model.

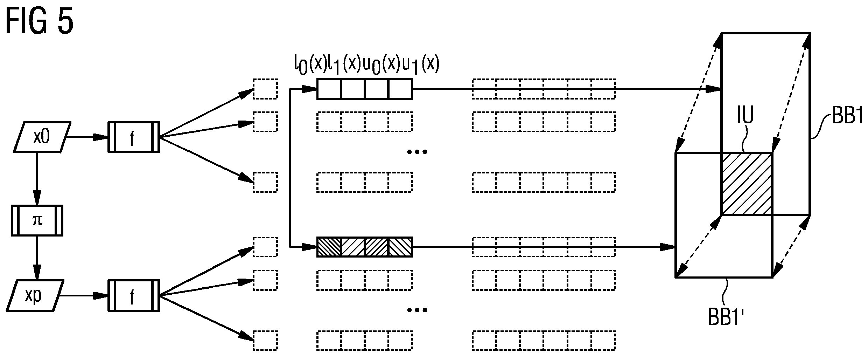

This scenario is illustrated in Fig. 5. The location and size of bounding box BB1 output by the object detection model f for unperturbed image data x, also noted as x0, differs significantly from the location and size of bounding box BB1' output by the object detection model f for the perturbed image data ***x̃*** ,also noted as xp. The area IU which the bounding box BB1 and BB1' have in common is provided by the Intersection-of-unit functional unit.

Thus, scenario as shown in Fig. 5 illustrates the fourth requirement, where at least one predicted bounding box under perturbation is significantly different from that without perturbation in term of Intersection-over-Unit. An Ip norm can be used as a more stable calculation of the respective coordinates distance.

In the following two embodiments of an algorithm for quantification of the robustness value including step S1-S4 are provided in terms of pseudo code. In the first embodiment all data elements of image data x are used for quantification. The second embodiment only a subset of the data elements of the image data x are used.

In the first embodiment algorithm 1 performs the integration of cross Lipschitz-ness functions into the CLEVER framework, as described in Weng et al. The known CLEVER function is enhanced by the robustness requirements. The resulting robustness value *µ*^{[*c*]} provides the minimum perturbation which leads to a change in the output of the object detection model f. In other words, the robustness value *µ*^{[*c*]} provides a robustness guarantee, that the object detection model f will output an unchanged result for any perturbation ***Δ*** of the image data with ||***Δ***||*ₚ* < *µ* for each bounding box *c*. *µ*^{[*c*]} is a scalar value that represents the radius of a hyper ball centered at the given data element. The guarantee is that the model remains robust, i.e., by its original prediction, as long as the perturbation does not leave the ball.

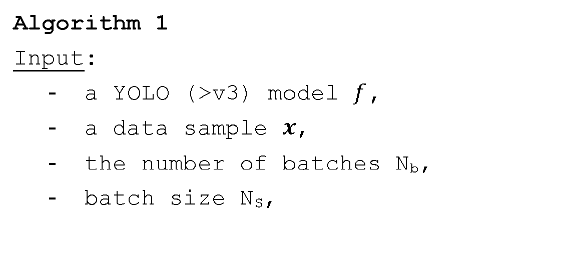

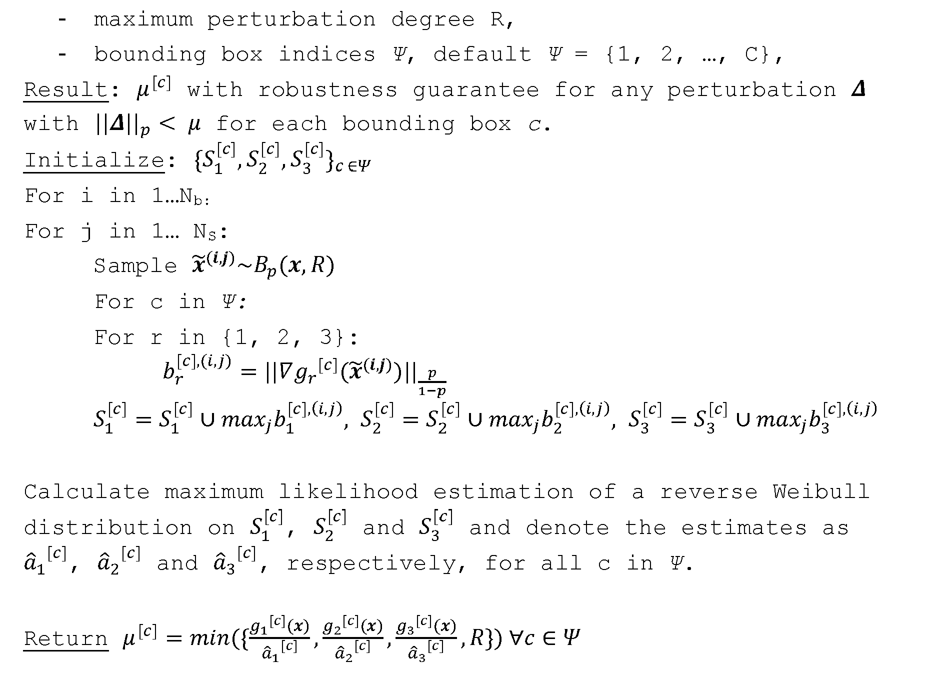

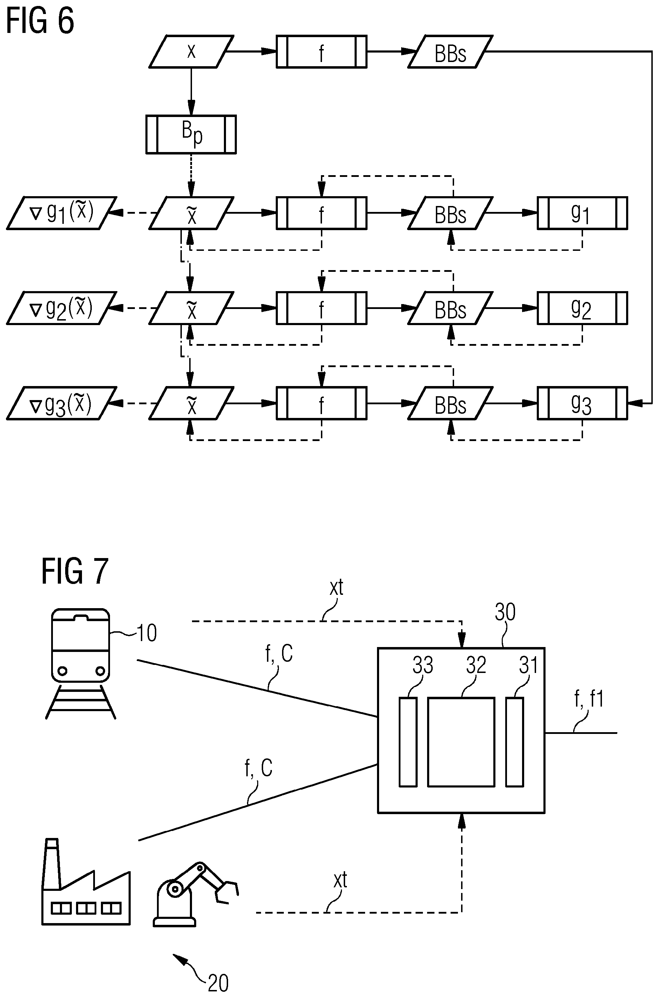

The core of algorithm 1, namely the steps to calculate the gradients *∇gᵣ*^{[*c*]}(***x̃*** ), is illustrated in Fig. 6. The superscript of [c] is omitted for the sake of simplicity. Output of this these steps are the gradients. The norm of them would be used to perform maximum likelihood estimation MLE under the Weibull assumption and the minimum therefore as well as the sampling radius will produce the final result.

In Fig.6 copying steps are marked by dash-dotted arrows, sampling steps are marked by dotted arrows, backward passes are marked by solid-lined arrows and forward passes are marked by dashed arrows. In total four forward passes and three backward passes are performed to collect one observation of the gradient norm ${\left‖∇{{g}_{r}}^{\left[c\right]}\left({{x}^{˜}}^{\left(i, j\right)}\right)\right‖}_{\frac{p}{1 - p}}$

In the first embodiment algorithm 1 the entire image data including all pixels contribute to the cross Lipschitz-ness functions. Under certain circumstances perturbation within a certain bounding box is enough to influence the prediction regarding that bounding box. Consequently, the gradient norm derived would be much smaller and the robust threshold thus larger. Following additional steps in S11, see Fig.1, are proposed to take this into account:
i). Collect all predicted bounding boxes given an original / unperturbed sample image.
ii). For each bounding box, define a binary masking matrix such that all pixels outside the bounding box have value 0 and all pixels within the box have value 1.
iii) Multiply the masking matrix with image x, perform the algorithm introduced above while ignoring all other bounding boxes.

That is, Algorithm 2 will first do a forward pass to calculate the bounding box predictions. This information is used to formulate the masking matrix ${M}_{i , j , :}^{\left[c\right]}$. Then Algorithm 1 is executed with the masked input and a single bounding box index c.

The execution of algorithm 2 requires significantly less processing steps then algorithm 1. And algorithm 1 requires significantly less processing power then commonly discussed and applied methods.

Fig. 7 shows a certification apparatus 30 applied to provide positive certification of at least one object detection model f which is candidate for being applied for monitoring or control tasks in a transportation environment 10, e.g., in an autonomous driving train, or in an industrial environment 20, e.g., in a manufacturing process or motion control of a robot in an industrial shop floor.

The certification apparatus comprises an input unit 31, a processing unit 32 and an output unit. The input unit 31 is configured to receive an object detection model f which is trained to output a predicted object in terms of a location in an image data x and of an object class out of a set of object classes when the image data x is input into the object detection model. It further comprises a processing unit configured to apply a set of robustness requirements to the object detection model, to derive from each robustness requirement a cross Lipschitz-ness function g, which quantifies the robustness requirement conditioned on the object detection model f for the input image data x. The processing unit 32 is configured to determine a robustness value of the object detection model f by calculating the cross Lipschitz-ness function integrated into a Cross Lipschitz Extreme Value for Network Robustness CLEVER score of the object detection model for a perturbed image data xp deviating from the unperturbed image data x0 of the image data x, and to compare the determined robustness value RV with a pre-defined robustness threshold value RT. The output unit is configured to output a positive certification for applying the object detection model f in the controlling task and/or the monitoring task if the robustness value is below the predefined robustness threshold value.

The certification apparatus is configured to receive at least one further object detection models f1 and output a list of those object detection models which received a positive certification. Optionally the certification apparatus receives additional image data, e.g., sampled from the transportation environment 10 or the industrial environment 20 to re-train the considered object detection model f to overcome the deficiencies and result in an optimized object detection model f' which is analyzed again by the certification apparatus 30.

Heuristic search methods quantify the object detection model's robustness, e.g., by perturbing multiple input data element with varying degrees and calculating the batch mAP. Such an approach requires a huge amount of model predictions in form of forward pass on perturbed image data and does not calculate the robustness directly but only the mAP as proxy.

The proposed method gives a real and detailed definition of robust object detection. he corresponding cross Lipschitz-ness function is derived from each robustness requirement and integrated into the CLEVER framework. This enables estimating the model robustness using a much smaller number of backward passes, exploiting the Extreme Value Theory of Weng et al and the connection between Lipschitz-ness and gradient norm identified in Paulaviĉius et al.

In comparison with Weng et al, we have largely generalized the definition of cross Lipschitz-ness to more complex situations such as object detection tasks. We propose to calculate multiple cross Lipschitz-ness functions and take the worst-case norm of the respective gradients.

It is to be understood that the above description of examples is intended to be illustrative and that the illustrated components are susceptible to various modifications, provided that these modification fall within the scope of the appended set of claims. For example, the illustrated concepts could be applied for different technical systems and especially for different sub-types of the respective technical system with only minor adaptions.

## Claims

1. Computer-implemented method for automatically quantifying a robustness of an object detection model (f) applied for a controlling task and/or a monitoring task, comprising
- receiving (S1) the object detection model (f) which is trained to output a predicted object in terms of a location in an image data (x) and of an object class out of a set of object classes when the image data (x) is input into the object detection model (f),
- applying (S2) a set of robustness requirements to the object detection model (f),
- deriving (S3) from each robustness requirement a cross Lipschitz-ness function (g), which quantifies the robustness requirement conditioned on the object detection model (f) for the input image data (x),
- determining (S4) a robustness value (RV) of the object detection model (f) by calculating the cross Lipschitz-ness function integrated into a Cross Lipschitz Extreme Value for Network Robustness CLEVER score of the object detection model (f) for a perturbed image data (xp) deviating from the unperturbed image data (x0) of the image data (x),
- comparing (S5) the determined robustness value (RV) with a predefined robustness threshold value (RT), and
- outputting (S6) a positive certification (C) for applying the object detection model (f) in the controlling task and/or the monitoring task if the robustness value (RV) is below the predefined robustness threshold value (RT), wherein each robustness requirement is defined by stating a scenario where the object detection model (f) is not considered to be robust.

2. Computer-implemented method according to claim 1, wherein the object detection model (f) outputs a class probability for each bounding box (BB) of a set of bounding boxes, depending on the image data (x), wherein each bounding box (BB) specifies a location area in the image data (x), and wherein each of the bounding boxes (BB) having a class probability higher than a predefined probability value is a predicted bounding box.

3. Computer-implemented method according to claim 2, wherein according to a first robustness requirement, the object detection model (f) is not robust, if at least one predicted bounding box (BB') of the object detection model (f) processed with perturbed image data (xp) is misclassified in comparison with the prediction of the object detection model (f) processed with unperturbed image data (x0).

4. Computer-implemented method according to any of claims 2 and 3, wherein according to a second robustness requirement the object detection model is not robust, if at least one bounding box which was output as predicted bounding box (BB) by the object detection model (f) for unperturbed image data (x0) is omitted and no longer output as a predicted bounding box (BB') by the object detection model (f) for perturbed image data (xp).

5. Computer-implemented method according to any of claims 2-4, wherein according to a third robustness requirement the object detection model (f) is not robust if at least one bounding box (BB') is output as a predicted bounding box by the object detection model for perturbed image data (xp) although the same bounding box (BB) was not a predicted bounding box output by the object detection model (f) for unperturbed image data (x0).

6. Computer-implemented method according to any of claims 2-5, wherein according to a fourth robustness requirement the object detection model (f) is not robust if at least one predicted bounding box (BB') output by the object detection model (f) for perturbed image data (xp) is different in terms of size and location in the image data from the same predicted bounding box (BB) output by the object detection model (f) for unperturbed image data (x0).

7. Computer-implemented method according to claim 6, wherein an agreement of the at least one predicted bounding box (BB') output for perturbed image data (xp) and the at least one predicted bounding box (BB) output for unperturbed image data (x0) is determined by an Intersection-over-Union functional unit.

8. Computer-implemented method according to any of claims 3-6, wherein the perturbed image data (xp) is sampled from a hyperball centred at the unperturbed image data (x0).

9. Computer-implemented method according to any of the preceding claims, wherein all data elements of the image data (x) are used to determine the robustness value (RV), or wherein only data elements of the image data (x) located inside at least one of the bounding boxes (BB) output by the object detection model (f) for the image data (x) are used to determine the robustness value (RV)

10. Computer-implemented method according to any of the preceding claims, wherein applying the object detection model (f) for controlling and/or monitoring of an industrial manufacturing process or of an autonomous driving vehicle.

11. Computer-implemented method according to any of the preceding claims, wherein the received object detection model is re-trained with a set of training image data (xt) which is selected such to optimize the robustness value (RV), if the robustness value (RV) is higher than the predefined robustness threshold (RT).

12. Computer-implemented method according to any of the preceding claims, additionally comprising
- receiving at least one further different object detection model (f1) trained to output at least one predicted object class,
- determining the robustness value (RV) of each of the received object detection models (f, f1),
- outputting a list of the robustness values (RV) of all object detection models (f, f1) with a positive certification,
- selecting one of the listed object detection models (f, f1), and
- using the selected object detection model (f) for the controlling task and/or the monitoring task.

13. Certification apparatus comprising
an input unit (31) configured to
- receive an object detection model (f) which is trained to output a predicted object in terms of a location in an image data (x) and of an object class out of a set of object classes when the image data (x) is input into the object detection model (f),
a processing unit (32) configured to
- apply a set of robustness requirements to the object detection model (f),
- derive from each robustness requirement a cross Lipschitz-ness function (g), which quantifies the robustness requirement conditioned on the object detection model (f) for the input image data (x),
- determine a robustness value (RV) of the object detection model (f) by calculating the cross Lipschitz-ness function integrated into a Cross Lipschitz Extreme Value for Network Robustness CLEVER score of the object detection model (f) for a perturbed image data (xp) deviating from the unperturbed image data (x0) of the image data (x),
- compare the determined robustness value (RV) with a predefined robustness threshold value (RT), and
an output unit (33) configured to
- output a positive certification for applying the object detection model (f) in the controlling task and/or the monitoring task if the robustness value (RV) is below the predefined robustness threshold value (RT),
wherein each robustness requirement is defined by stating a scenario where the object detection model (f) is not considered to be robust.

14. A computer program product directly loadable into the internal memory of a digital computer, comprising software code portions for performing the steps of claim 1-12 when said product is run on said digital computer.

## Patentansprüche

1. Computerimplementiertes Verfahren zur automatischen Quantifizierung einer Robustheit eines Objekterkennungsmodells (f), das für eine Steuerungsaufgabe und/oder eine Überwachungsaufgabe verwendet wird, umfassend
- Empfangen (S1) des Objekterkennungsmodells (f), das darauf trainiert ist, ein vorhergesagtes Objekt in Bezug auf einen Ort in Bilddaten (x) und eine Objektklasse aus einem Satz von Objektklassen auszugeben, wenn die Bilddaten (x) in das Objekterkennungsmodell (f) eingegeben werden,
- Anwenden (S2) eines Satzes von Robustheitsanforderungen auf das Objekterkennungsmodell (f),
- Ableiten (S3) einer Cross-Lipschitz-Funktion (g) aus jeder Robustheitsanforderung, die die Robustheitsanforderung bedingt auf das Objekterkennungsmodell (f) für die eingegebenen Bilddaten (x) quantifiziert,
- Bestimmen (S4) eines Robustheitswerts (RV - robustness value) des Objekterkennungsmodells (f) durch Berechnen der Cross-Lipschitz-Funktion, die in einen CLEVER(Cross Lipschitz Extreme Value for Network Robustness)-Score des Objekterkennungsmodells (f) für gestörte Bilddaten (xp), die von den ungestörten Bilddaten (x0) der Bilddaten (x) abweichen, integriert ist,
- Vergleichen (S5) des bestimmten Robustheitswerts (RV) mit einem vordefinierten Robustheitsschwellenwert (RT - robustness threshold value), und
- Ausgeben (S6) einer positiven Zertifizierung (C) für das Verwenden des Objekterkennungsmodells (f) in der Steuerungsaufgabe und/oder der Überwachungsaufgabe, wenn der Robustheitswert (RV) unter dem vordefinierten Robustheitsschwellenwert (RT) liegt, wobei jede Robustheitsanforderung durch Angeben eines Szenarios definiert wird, in dem das Objekterkennungsmodell (f) als nicht robust angesehen wird.

2. Computerimplementiertes Verfahren nach Anspruch 1, wobei das Objekterkennungsmodell (f) eine Klassenwahrscheinlichkeit für jede Bounding-Box (BB) eines Satzes von Bounding-Boxen in Abhängigkeit von den Bilddaten (x) ausgibt, wobei jede Bounding-Box (BB) einen Ortsbereich in den Bilddaten (x) spezifiziert, und wobei jede der Bounding-Boxen (BB), die eine Klassenwahrscheinlichkeit aufweist, die höher als ein vordefinierter Wahrscheinlichkeitswert ist, eine vorhergesagte Bounding-Box ist.

3. Computerimplementiertes Verfahren nach Anspruch 2, wobei gemäß einer ersten Robustheitsanforderung das Objekterkennungsmodell (f) nicht robust ist, wenn mindestens eine vorhergesagte Bounding-Box (BB') des Objekterkennungsmodells (f), das mit gestörten Bilddaten (xp) verarbeitet wird, im Vergleich zu der Vorhersage des Objekterkennungsmodells (f), das mit ungestörten Bilddaten (x0) verarbeitet wird, falsch klassifiziert wird.

4. Computerimplementiertes Verfahren nach einem der Ansprüche 2 und 3, wobei gemäß einer zweiten Robustheitsanforderung das Objekterkennungsmodell nicht robust ist, wenn mindestens eine Bounding-Box, die als vorhergesagte Bounding-Box (BB) durch das Objekterkennungsmodell (f) für ungestörte Bilddaten (x0) ausgegeben wurde, weggelassen wird und nicht mehr als eine vorhergesagte Bounding-Box (BB') durch das Objekterkennungsmodell (f) für gestörte Bilddaten (xp) ausgegeben wird.

5. Computerimplementiertes Verfahren nach einem der Ansprüche 2-4, wobei gemäß einer dritten Robustheitsanforderung das Objekterkennungsmodell (f) nicht robust ist, wenn mindestens eine Bounding-Box (BB') als eine vorhergesagte Bounding-Box durch das Objekterkennungsmodell für gestörte Bilddaten (xp) ausgegeben wird, obwohl dieselbe Bounding-Box (BB) keine vorhergesagte Bounding-Box war, die durch das Objekterkennungsmodell (f) für ungestörte Bilddaten (x0) ausgegeben wurde.

6. Computerimplementiertes Verfahren nach einem der Ansprüche 2-5, wobei gemäß einer vierten Robustheitsanforderung das Objekterkennungsmodell (f) nicht robust ist, wenn mindestens eine vorhergesagte Bounding-Box (BB'), die durch das Objekterkennungsmodell (f) für gestörte Bilddaten (xp) ausgegeben wird, sich in Bezug auf Größe und Ort in den Bilddaten von derselben vorhergesagten Bounding-Box (BB) unterscheidet, die durch das Objekterkennungsmodell (f) für ungestörte Bilddaten (x0) ausgegeben wird.

7. Computerimplementiertes Verfahren nach Anspruch 6, wobei eine Übereinstimmung der mindestens einen vorhergesagten Bounding-Box (BB'), die für gestörte Bilddaten (xp) ausgegeben wird, und der mindestens einen vorhergesagten Bounding-Box (BB), die für ungestörte Bilddaten (x0) ausgegeben wird, durch eine Intersection-over-Union-Funktionseinheit bestimmt wird.

8. Computerimplementiertes Verfahren nach einem der Ansprüche 3-6, wobei die gestörten Bilddaten (xp) aus einem Hyperball abgetastet werden, der an den ungestörten Bilddaten (x0) zentriert ist.

9. Computerimplementiertes Verfahren nach einem der vorhergehenden Ansprüche, wobei alle Datenelemente der Bilddaten (x) verwendet werden, um den Robustheitswert (RV) zu bestimmen, oder wobei nur Datenelemente der Bilddaten (x), die sich innerhalb mindestens einer der Bounding-Boxen (BB) befinden, die durch das Objekterkennungsmodell (f) für die Bilddaten (x) ausgegeben werden, verwendet werden, um den Robustheitswert (RV) zu bestimmen.

10. Computerimplementiertes Verfahren nach einem der vorhergehenden Ansprüche, wobei das Anwenden des Objekterkennungsmodells (f) zur Steuerung und/oder Überwachung eines industriellen Herstellungsprozesses oder eines autonom fahrenden Fahrzeugs erfolgt.

11. Computerimplementiertes Verfahren nach einem der vorhergehenden Ansprüche, wobei das empfangene Objekterkennungsmodell mit einem Satz von Trainingsbilddaten (xt), der so ausgewählt ist, dass er den Robustheitswert (RV) optimiert, neu trainiert wird, wenn der Robustheitswert (RV) höher als die vordefinierte Robustheitsschwelle (RT) ist.

12. Computerimplementiertes Verfahren nach einem der vorhergehenden Ansprüche, zusätzlich umfassend
- Empfangen mindestens eines weiteren unterschiedlichen Objekterkennungsmodells (f1), das darauf trainiert ist, mindestens eine vorhergesagte Objektklasse auszugeben,
- Bestimmen des Robustheitswerts (RV) jedes der empfangenen Objekterkennungsmodelle (f, f1),
- Ausgeben einer Liste der Robustheitswerte (RV) aller Objekterkennungsmodelle (f, f1) mit einer positiven Zertifizierung,
- Auswählen eines der aufgelisteten Objekterkennungsmodelle (f, f1), und
- Verwenden des ausgewählten Objekterkennungsmodells (f) für die Steuerungsaufgabe und/oder die Überwachungsaufgabe.

13. Zertifizierungseinrichtung, umfassend
eine Eingabeeinheit (31), die konfiguriert ist, um
- ein Objekterkennungsmodell (f) zu empfangen, das darauf trainiert ist, ein vorhergesagtes Objekt in Bezug auf einen Ort in Bilddaten (x) und eine Objektklasse aus einem Satz von Objektklassen auszugeben, wenn die Bilddaten (x) in das Objekterkennungsmodell (f) eingegeben werden,
eine Verarbeitungseinheit (32), die konfiguriert ist, um
- einen Satz von Robustheitsanforderungen auf das Objekterkennungsmodell (f) anzuwenden,
- eine Cross-Lipschitz-Funktion (g) aus jeder Robustheitsanforderung abzuleiten, die die Robustheitsanforderung bedingt auf das Objekterkennungsmodell (f) für die eingegebenen Bilddaten (x) quantifiziert,
- einen Robustheitswert (RV) des Objekterkennungsmodells (f) durch Berechnen der Cross-Lipschitz-Funktion, die in einen CLEVER(Cross Lipschitz Extreme Value for Network Robustness)-Score des Objekterkennungsmodells (f) für gestörte Bilddaten (xp), die von den ungestörten Bilddaten (x0) der Bilddaten (x) abweichen, integriert ist, zu bestimmen,
- den bestimmten Robustheitswert (RV) mit einem vordefinierten Robustheitsschwellenwert (RT) zu vergleichen, und
eine Ausgabeeinheit (33), die konfiguriert ist, um
- eine positive Zertifizierung für das Verwenden des Objekterkennungsmodells (f) in der Steuerungsaufgabe und/oder der Überwachungsaufgabe auszugeben, wenn der Robustheitswert (RV) unter dem vordefinierten Robustheitsschwellenwert (RT) liegt,
wobei jede Robustheitsanforderung durch Angeben eines Szenarios definiert wird, in dem das Objekterkennungsmodell (f) als nicht robust angesehen wird.

14. Computerprogrammprodukt, das direkt in den internen Speicher eines digitalen Computers ladbar ist, umfassend Softwarecodeabschnitte zum Durchführen der Schritte nach Anspruch 1-12, wenn das Produkt auf dem digitalen Computer ausgeführt wird.

## Revendications

1. Procédé mis en œuvre par ordinateur pour quantifier automatiquement une robustesse d'un modèle de détection d'objet (f) appliqué pour une tâche de contrôle et/ou une tâche de surveillance, comprenant
- la réception (S1) du modèle de détection d'objet (f) qui est entraîné pour délivrer en sortie un objet prédit en termes d'un emplacement dans une donnée d'image (x) et d'une classe d'objet parmi un ensemble de classes d'objet lorsque les données d'image (x) sont entrées dans le modèle de détection d'objet (f),
- l'application (S2) d'un ensemble d'exigences de robustesse au modèle de détection d'objet (f),
- la dérivation (S3) à partir de chaque exigence de robustesse d'une fonction de Lipschitz-ness croisée (g), qui quantifie l'exigence de robustesse conditionnée sur le modèle de détection d'objet (f) pour les données d'image d'entrée (x),
- la détermination (S4) d'une valeur de robustesse (RV) du modèle de détection d'objet (f) en calculant la fonction de Lipschitz-ness croisée intégrée en une valeur extrême de Lipschitz croisée pour un score CLEVER de robustesse de réseau du modèle de détection d'objet (f) pour des données d'image perturbées (xp) s'écartant des données d'image non-perturbées (x0) des données d'image (x),
- la comparaison (S5) de la valeur de robustesse déterminée (RV) à une valeur seuil de robustesse prédéfinie (RT), et
- la délivrance en sortie (S6) d'une certification positive (C) pour appliquer le modèle de détection d'objet (f) dans la tâche de contrôle et/ou la tâche de surveillance si la valeur de robustesse (RV) est inférieure à la valeur seuil de robustesse prédéfinie (RT), dans lequel chaque exigence de robustesse est définie en spécifiant un scénario où le modèle de détection d'objet (f) n'est pas considéré comme étant robuste.

2. Procédé mis en œuvre par ordinateur selon la revendication 1, dans lequel le modèle de détection d'objet (f) délivre en sortie une probabilité de classe pour chaque boîte de délimitation (BB) d'un ensemble de boîtes de délimitation, en fonction des données d'image (x), dans lequel chaque boîte de délimitation (BB) spécifie une zone d'emplacement dans les données d'image (x), et dans lequel chacune des boîtes de délimitation (BB) ayant une probabilité de classe supérieure à une valeur de probabilité prédéfinie est une boîte de délimitation prédite.

3. Procédé mis en œuvre par ordinateur selon la revendication 2, dans lequel, selon une première exigence de robustesse, le modèle de détection d'objet (f) n'est pas robuste, si au moins une boîte de délimitation prédite (BB') du modèle de détection d'objet (f) traité avec des données d'image perturbées (xp) est incorrectement classée en comparaison avec la prédiction du modèle de détection d'objet (f) traité avec des données d'image non-perturbées (x0).

4. Procédé mis en œuvre par ordinateur selon l'une des revendications 2 et 3, dans lequel, selon une deuxième exigence de robustesse, le modèle de détection d'objet n'est pas robuste, si au moins une boîte de délimitation qui a été délivrée en sortie en tant que boîte de délimitation prédite (BB) par le modèle de détection d'objet (f) pour des données d'image non-perturbées (x0) est omise et n'est plus délivrée en sortie en tant que boîte de délimitation prédite (BB') par le modèle de détection d'objet (f) pour des données d'image perturbées (xp).

5. Procédé mis en œuvre par ordinateur selon l'une des revendications 2-4, dans lequel, selon une troisième exigence de robustesse, le modèle de détection d'objet (f) n'est pas robuste si au moins une boîte de délimitation (BB') est délivrée en sortie en tant que boîte de délimitation prédite par le modèle de détection d'objet pour des données d'image perturbées (xp) bien que la même boîte de délimitation (BB) n'était pas une boîte de délimitation prédite délivrée en sortie par le modèle de détection d'objet (f) pour des données d'image non-perturbées (x0).

6. Procédé mis en œuvre par ordinateur selon l'une des revendications 2-5, dans lequel, selon une quatrième exigence de robustesse, le modèle de détection d'objet (f) n'est pas robuste si au moins une boîte de délimitation prédite (BB') délivrée en sortie par le modèle de détection d'objet (f) pour des données d'image perturbées (xp) est différente en termes de taille et d'emplacement dans les données d'image provenant de la même boîte de délimitation prédite (BB) délivrée en sortie par le modèle de détection d'objet (f) pour des données d'image non-perturbées (x0).

7. Procédé mis en œuvre par ordinateur selon la revendication 6, dans lequel un accord de l'au moins une boîte de délimitation prédite (BB') délivrée en sortie pour des données d'image perturbées (xp) et de l'au moins une boîte de délimitation prédite (BB) délivrée en sortie pour des données d'image non-perturbées (x0) est déterminé par une unité fonctionnelle basée sur l'indice de Jaccard.

8. Procédé mis en œuvre par ordinateur selon l'une des revendications 3-6, dans lequel les données d'image perturbées (xp) sont échantillonnées à partir d'un hyperballon centré au niveau des données d'image non-perturbées (x0).

9. Procédé mis en œuvre par ordinateur selon l'une des revendications précédentes, dans lequel tous les éléments de données des données d'image (x) sont utilisés pour déterminer la valeur de robustesse (RV), ou dans lequel seuls des éléments de données des données d'image (x) situés à l'intérieur d'au moins l'une des boîtes de délimitation (BB) délivrées en sortie par le modèle de détection d'objet (f) pour les données d'image (x) sont utilisés pour déterminer la valeur de robustesse (RV)

10. Procédé mis en œuvre par ordinateur selon l'une des revendications précédentes, dans lequel l'application du modèle de détection d'objet (f) pour contrôler et/ou surveiller un processus de fabrication industriel ou un véhicule à conduite autonome.

11. Procédé mis en œuvre par ordinateur selon l'une des revendications précédentes, dans lequel le modèle de détection d'objet reçu est entraîné à nouveau avec un ensemble de données d'image d'apprentissage (xt) qui est sélectionné de façon à optimiser la valeur de robustesse (RV), si la valeur de robustesse (RV) est supérieure au seuil de robustesse prédéfini (RT).

12. Procédé mis en œuvre par ordinateur selon l'une des revendications précédentes, comprenant en plus
- la réception d'au moins un autre modèle de détection d'objet différent (f1) entraîné pour délivrer en sortie au moins une classe d'objet prédite,
- la détermination de la valeur de robustesse (RV) de chacun des modèles de détection d'objet reçus (f, f1),
- la délivrance en sortie d'une liste des valeurs de robustesse (RV) de tous les modèles de détection d'objet (f, f1) avec une certification positive,
- la sélection d'un parmi les modèles de détection d'objet listés (f, f1), et
- l'utilisation du modèle de détection d'objet sélectionné (f) pour la tâche de contrôle et/ou la tâche de surveillance.

13. Appareil de certification comprenant
une unité d'entrée (31) configurée pour
- recevoir un modèle de détection d'objet (f) qui est entraîné pour délivrer en sortie un objet prédit en termes d'un emplacement dans des données d'image (x) et d'une classe d'objet parmi un ensemble de classes d'objet lorsque les données d'image (x) sont entrées dans le modèle de détection d'objet (f),
une unité de traitement (32) configurée pour
- appliquer un ensemble d'exigences de robustesse au modèle de détection d'objet (f),
- dériver à partir de chaque exigence de robustesse une fonction de Lipschitz-ness croisée (g), qui quantifie l'exigence de robustesse conditionnée sur le modèle de détection d'objet (f) pour les données d'image d'entrée (x),
- déterminer une valeur de robustesse (RV) du modèle de détection d'objet (f) en calculant la fonction de Lipschitz-ness croisée intégrée en une valeur extrême de Lipschitz croisée pour un score CLEVER de robustesse de réseau du modèle de détection d'objet (f) pour des données d'image perturbées (xp) s'écartant des données d'image non-perturbées (x0) des données d'image (x),
- comparer la valeur de robustesse déterminée (RV) à une valeur seuil de robustesse prédéterminée (RT), et
une unité de sortie (33) configurée pour
- délivrer en sortie une certification positive pour appliquer le modèle de détection d'objet (f) dans la tâche de contrôle et/ou la tâche de surveillance si la valeur de robustesse (RV) est inférieure à la valeur seuil de robustesse prédéfinie (RT),
dans lequel chaque exigence de robustesse est définie en spécifiant un scénario où le modèle de détection d'objet (f) n'est pas considéré comme étant robuste.

14. Produit de programme informatique pouvant être chargé directement dans la mémoire interne d'un calculateur numérique, comprenant des parties de code logiciel pour la réalisation des étapes selon les revendications 1-12 lorsque ledit produit est exécuté sur ledit calculateur numérique.
